# EUROPEAN PATENT APPLICATION

(11) **EP 2 465 746 A2**
(43) Date of publication of application: **20.06.2012**
(21) Application number: 11194075.5
(22) Date of filing: 16.12.2011
(51) Int. Cl.: B62B 1/00, B62B 1/12, B62B 5/06

(54) **Expandable and convertible hand trucks**

(30) Priority: 17.12.2010 US 201013424421
(71) Applicant: DG Manufacturing, LLC, Wichita, KS 67226 (US)
(72) Inventor: Ryan, Paul, Wichita, KS Kansas 67230 (US); Wood, Robert Allen, Lincoln, NE Nebraska 68506 (US)
(74) Representative: Lunt, Mark George Francis

(57) **Abstract**

A hand truck (100) comprises: (1) a hand truck frame (101); (2) a nose plate (120) that is disposed adjacent a lower end of the hand truck frame; (3) a primary wheel assembly (130) disposed adjacent the nose plate; (4) a secondary wheel assembly (150) disposed adjacent an upper end of the hand truck frame; and (5) an extension mechanism (140) that is adapted to allow a user to selectively adjust the distance between the plurality of primary wheels and the at least one secondary wheel.

## Description

### BACKGROUND

Hand trucks are commonly used to move items that are too heavy or bulky to be moved manually. Hand trucks are advantageous because they can be used to move items in an upright position, which helps to maneuver the items in and through narrow spaces. They also allow users to transport items without manually lifting the full weight of the items.

One disadvantage associated with conventional hand trucks is that they aren't typically suitable for carrying multiple items that can't be safely or effectively stacked. Conventional hand trucks also require the user to maintain a heightened level of concentration as they move items from place to place because the user must continuously balance the hand truck's frame and load over its wheels while moving the items. Accordingly, there is a need for improved hand trucks that may, for example, address such issues.

### SUMMARY

The present invention is as claimed in claim 1. A hand truck according to the invention includes: (1) a hand truck frame, (2) a nose plate disposed adjacent a lower end of the hand truck frame, (3) a primary wheel assembly comprising at least one primary wheel disposed adjacent the nose plate, and (4) a secondary wheel assembly comprising at least one secondary wheel disposed adjacent an upper end of the hand truck frame. In particular embodiments, the hand truck is adapted to be selectively moved between: (1) a hand truck orientation in which : (a) the at least one primary wheel is positioned in contact with the support surface that is supporting the hand truck; (b) the secondary wheel assembly is spaced apart from the support surface; and (c) the hand truck is oriented to use the primary wheel assembly, but not the secondary wheel assembly to roll over the support surface; and (2) a cart orientation in which: (a) the at least one primary wheel is positioned in contact with the support surface; (b) the at least one secondary wheel is positioned in contact with the support surface; and (c) the hand truck is oriented to use both the primary wheel assembly and the secondary wheel assembly to roll over the support surface. In certain embodiments, the hand truck includes an extension mechanism for allowing a user to use the extension mechanism to selectively adjust a distance between the primary wheel assembly and the secondary wheel assembly.

A hand truck, comprising: (1) a hand truck frame, (2) a nose plate disposed adjacent a lower end of the hand truck frame, (3) a plurality of primary wheels disposed adjacent the nose plate, (4) at least one secondary wheel disposed adjacent an upper end of the hand truck frame, and (5) an extension mechanism. In particular embodiments, the extension mechanism is adapted to allow a user to selectively adjust a distance between the plurality of primary wheels and the at least one secondary wheel.

A hand truck, comprising: (1) a frame including a first frame member and a second frame member spaced laterally apart from the first frame member; (2) a nose plate disposed adjacent a lower end of the frame; (3) a plurality of primary wheels disposed adjacent the nose plate; (4) at least one secondary wheel disposed adjacent an upper end of the frame; and (5) an extension assembly. In particular embodiments, the extension assembly comprises: (1) a first elongated extension member slidably mounted with the first frame member; (2) a second elongated extension member slidably mounted with the second frame member; (3) a connecting member that connects a portion of the first extension member to a portion of the second extension member; and (4) a handle comprising a grip portion that is slidably mounted with the extension assembly. In certain embodiments, the extension assembly is adapted to slide between: (1) a first position in which the plurality of primary wheels are spaced apart a first distance from the at least one secondary wheel, and (2) a second, extended position in which the plurality of primary wheels are spaced apart from the at least one secondary wheel by a second distance that is greater than the first distance. In particular embodiments, the handle is configured to selectively slide between: (1) a first position in which the grip portion is spaced a first distance from the nose plate, and (2) a second, extended position in which the grip portion is spaced a second distance from the nose plate that is greater than the first distance.

### BRIEF DESCRIPTION OF THE DRAW INGS

Having thus described various embodiments of the invention in general terms, reference will be now be made to the accompanying drawings, which are not necessarily drawn to scale, and wherein:
FIG. 1 is a front perspective view of an expandable, convertible hand truck according to a first particular embodiment of the disclosed subject matter. In this figure, the hand truck is shown in a substantially vertical, hand truck configuration.
FIGS. 2 and 3 are front perspective views of the hand truck of FIG. 1 in which the hand truck's handle is in an extended position.
FIG. 4 is a front perspective view of the hand truck shown in FIG. 1 in which the hand truck is shown in a platform cart configuration.
FIG. 5 is a front perspective view of the hand truck shown in FIG. 4 in which the hand truck is shown in an extended platform cart configuration.
FIGS. 6-8 are close up views of a locking mechanism that may be used to maintain a hand truck, such as the hand truck of FIG. 1, in a particular extended or unextended orientation. These figures show the hand truck being gradually extended.
FIG. 9 is a front perspective view of a hand truck according to a second embodiment in which the hand truck is shown in a hand truck configuration.
FIG. 10 is a front perspective view of the hand truck of FIG. 9 in which the hand truck's lower handle is in an extended orientation.
FIG. 11 is a front perspective view of the hand truck of FIG. 9 in which the hand truck's upper handle is in an extended orientation.
FIG. 12 is a front perspective view of an expandable, convertible hand truck according to a second particular embodiment of the disclosed subject matter. In this figure, the hand truck is shown in an unextended platform cart configuration.
FIGS. 13-14 are front perspective views of the hand truck of FIG. 9 in which the hand truck is shown in an extended platform cart configuration.
FIG. 15 is a front perspective view the hand truck of FIG. 9 in which the hand truck's lower handle is in an extended orientation.

### DETAILED DESCRIPTION OF VARIOUS EMBODIMENTS

Various embodiments of the disclosed subject matter will now be described more fully hereinafter with reference to the accompanying drawings, in which various embodiments of the disclosed subject matter are shown. The claimed technology may, however, be embodied in many different forms and should not be construed as limited to the embodiments set forth herein. Rather, these embodiments are provided so that this disclosure will be thorough and complete, and will fully convey the scope of the technology to those skilled in the art. Like numbers refer to like elements throughout.

### Expandable Hand Truck

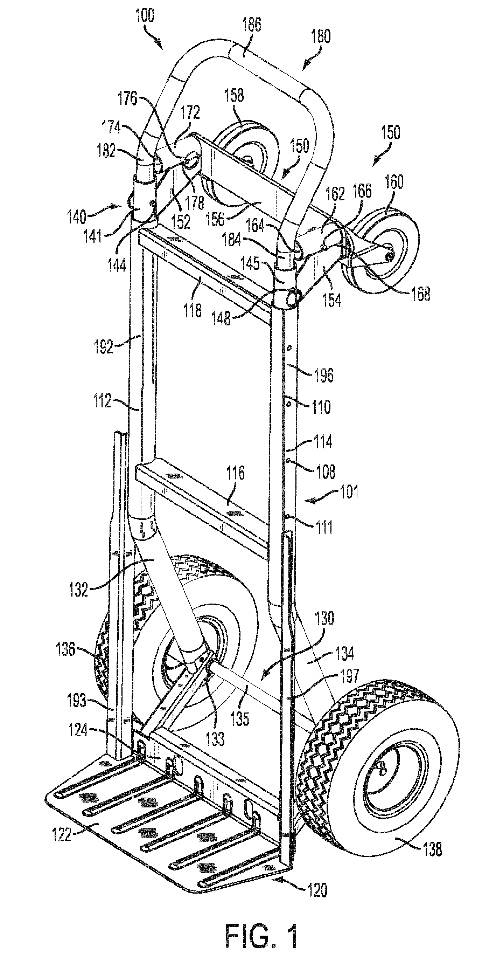

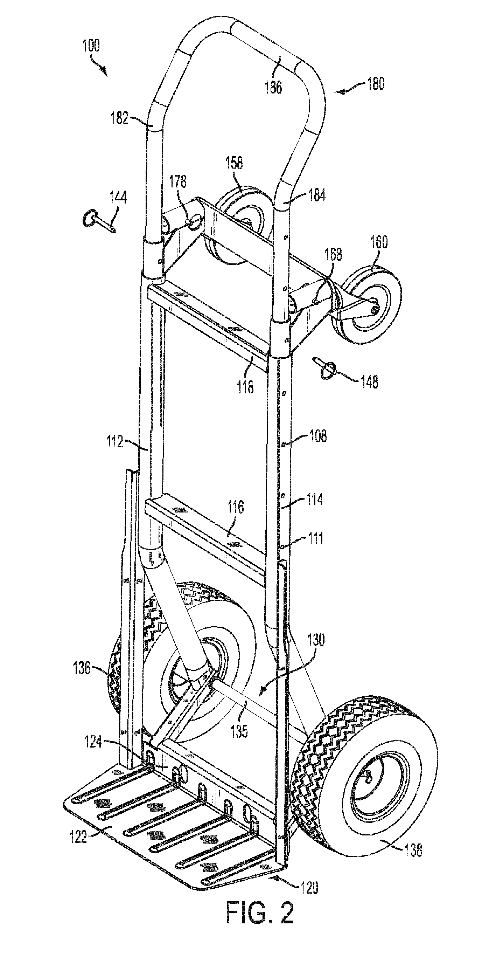

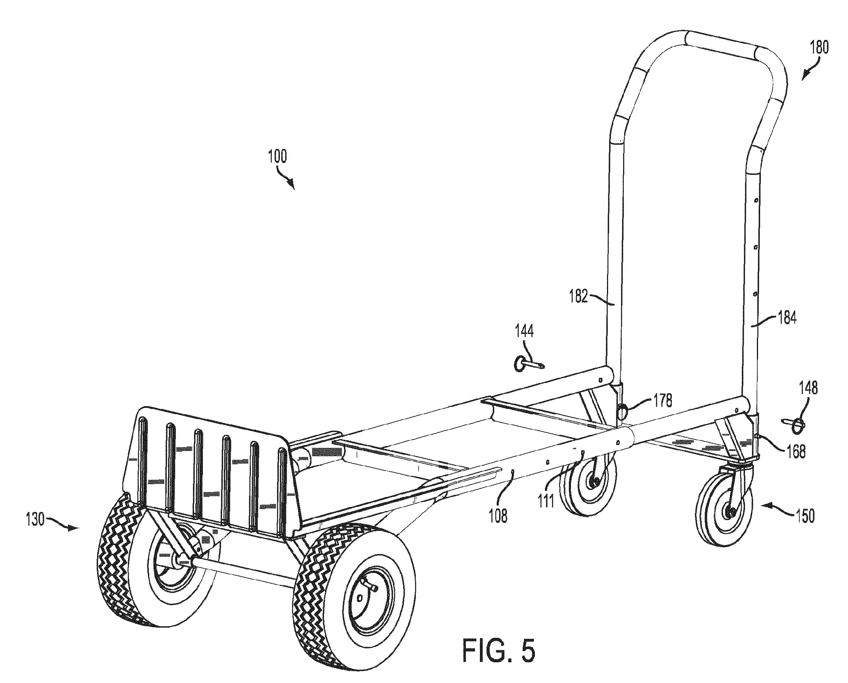

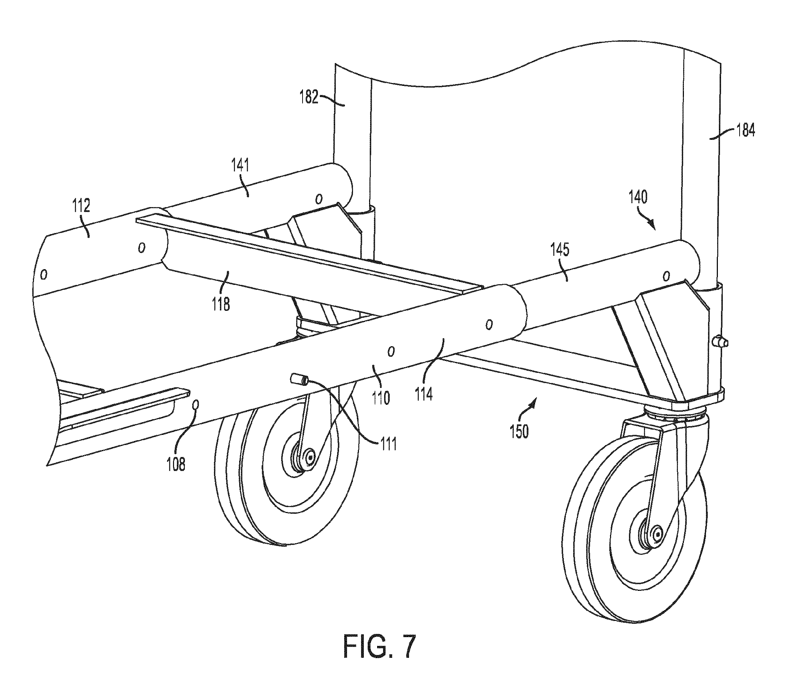

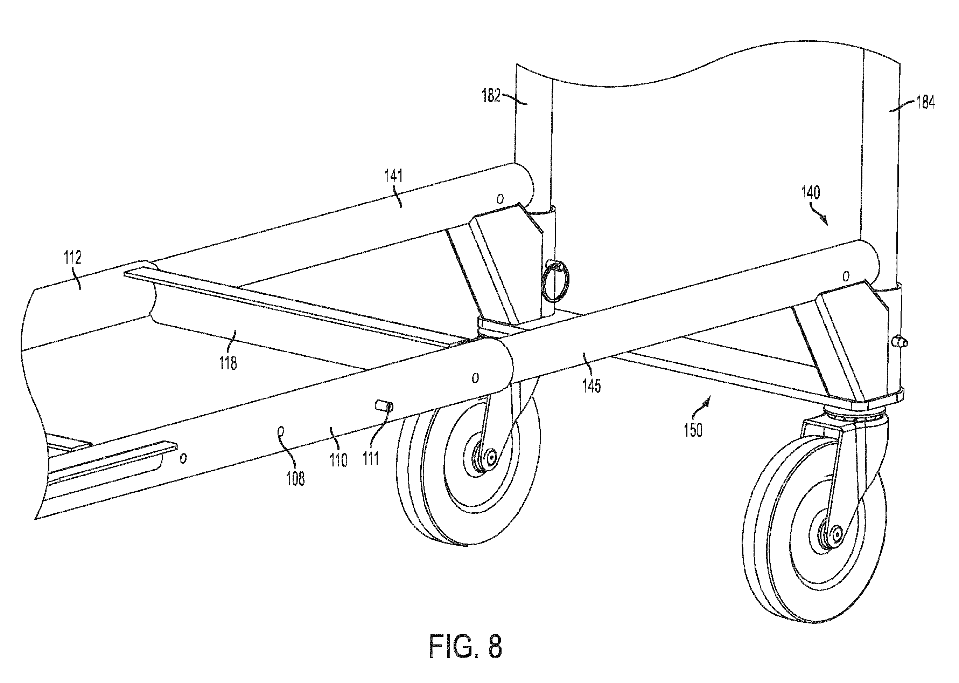

An expandable hand truck **100** according to a particular embodiment is shown in FIGS. 1-8. In this embodiment, the hand truck **100** comprises: (1) a hand truck base portion **101;** (2) an extendable frame assembly **140;** (3) a secondary wheel assembly **150;** and (4) an upper cart handle **180.** These components are discussed in greater detail below.

### Hand Truck Base Portion

In particular embodiments, the hand truck base portion **101** may comprise: (1) a frame **110;** (2) a nose plate **120;** and (3) a primary wheel assembly **130.** These components are discussed in greater detail below.

### 1. Frame

The hand truck base portion **101** may include any suitable type of frame. In the embodiment shown in FIG. 1, this frame **110** includes: (1) a right frame member **112** (which, in this embodiment, is a substantially straight, elongated frame member, which comprises an upper portion **192** and a lower portion **193,** and which is adapted to stand in a substantially vertical orientation when the hand truck base portion **101** is in an upright orientation); (2) a left frame member **114,** which, in this embodiment, is a substantially straight, elongated frame member, which comprises an upper portion **196** and a lower portion **197,** and which is adapted to stand in a substantially vertical orientation when the hand truck base portion **101** is in an upright orientation); and (3) a plurality of crossbars **116, 118** that extend between, and physically connect, the right and left frame members **112, 114.**

The various components of the frame **110** may be made of any suitable (preferably sturdy) material (e.g., a suitable metal such as steel or aluminum, or plastic). In various embodiments, these components are secured together using any suitable fastening technique to provide a rigid frame for the hand truck.

### 2. Nose Plate

The hand truck base portion **101** may include any suitable type of nose plate **120.** As shown in FIG. 1, this nose plate **120** may include: (1) a substantially planar support plate **122;** and (2) a substantially planar face plate **124** that extends upwardly adjacent a rear edge of the support plate **122.** The nose plate **120** is adapted to support a load and may be attached adjacent (e.g., to) a lower end of the hand truck base portion's frame **110** in any suitable manner (e.g., using suitable fasteners or welding techniques).

### 3. Primary Wheel Assembly

In particular embodiments, the hand truck's primary wheel assembly **130** is adapted for facilitating the movement of the hand truck **100** relative to a support surface that is supporting the hand truck **100.** In the embodiment shown in FIG. 1, the primary wheel assembly **130** includes a substantially L-shaped right axle support **132** that extends outwardly and rearwardly adjacent the lower end of the right frame member's upper portion **192,** and a substantially L-shaped left axle support **134** that extends outwardly and rearwardly adjacent (e.g., to) the lower end of the left frame member's upper portion **196.** The right axle support **132** defines an opening **133** adjacent an apex formed by the right axle support **132,** and the left axle support **134** defines a similar opening (not shown) that is adjacent an apex formed by the left axle support **134.**

The primary wheel assembly **130** may further include an elongated hand truck axle **135** (see FIG. 1) that extends through the openings **133** in the right and left axle supports **132, 134** so that the axle **135** is substantially parallel to a support surface that supports the hand truck **100** when the hand truck base portion **101** is in an upright orientation. The primary wheel assembly **130** further includes a pair of wheels **136, 138** that are rotatably mounted, respectively, adjacent (e.g., to) opposite ends of the hand truck's axle **135.**

### Extendable Frame Assembly

In particular embodiments, the extendable frame assembly **140** is adapted for facilitating the selective conversion of the hand truck **100** between: (1) an unextended configuration and (2) an extended configuration. In the embodiment of FIG. 1, this extendable frame assembly **140** includes: (1) a right extendable frame member **141;** (2) a left extendable frame member **145;** and (3) a connecting member that connects the right and left extendable frame members **141, 145.** These various components are discussed in greater detail below.

### 1. Right Extendable Frame Member

As shown in FIG. 1, the right extendable frame member **141** may comprise an elongated tube (e.g., a tube having a cross-section that, for example, may be substantially in the shape of a square, circle, oval, or any other suitable shape). The right extendable frame member **141** may be made of any suitable (preferably sturdy) material (e.g., a suitable metal such as steel or aluminum, or plastic).

As shown in FIG. 1, the right extendable frame member **141** may be adapted to fit within the upper portion **192** of the frame's right frame member **112** (which may be, for example, a hollow tube, or other suitable structure). In various embodiments, the inner cross-sectional profile of the upper portion **192** of the right frame member **112** at least substantially corresponds to an outer cross-sectional profile of the right extendable frame member **141.** In particular embodiments, the right extendable frame member **141** has an outer diameter that is substantially equal to an inner diameter of the upper portion **192** of the right frame member **112.** The respective diameters of the right extendable frame member **141** and upper portion **192** of the right frame member **112** may be chosen to allow the right extendable frame member **141** to translate within the upper portion **192** of the right frame member **112** while maintaining the right extendable frame member **141** in a substantially parallel configuration with the left extendable frame member **145** (e.g., while maintaining a tight fit - e.g., a mating fit - between the right extendable frame member **141** and the upper portion **192** of the right frame member **112).**

### 2. Left Extendable Frame Member

As shown in FIG. 1, the left extendable frame member **145** may comprise an elongated tube (e.g., a tube having a cross-section that, for example, may be substantially in the shape of a square, circle, oval, or any other suitable shape). The left extendable frame member **145** may be made of any suitable (preferably sturdy) material (e.g., a suitable metal such as steel or aluminum, or plastic).

As shown in FIG. 1, the left extendable frame member **145** may be adapted to fit within the upper portion **196** of the frame's left frame member **114** (which may be, for example, a hollow tube, or other suitable structure). In various embodiments, the inner cross-sectional profile of the upper portion **196** of the left frame member **114** at least substantially corresponds to an outer cross-sectional profile of the left extendable frame member **145.** In particular embodiments, the left extendable frame member **145** has an outer diameter that is substantially equal to an inner diameter of the upper portion **196** of the left frame member **114.** The respective diameters of the left extendable frame member **145** and upper portion **196** of the left frame member **114** may be chosen to allow the left extendable frame member **145** to translate within the upper portion **196** of the left frame member **114** while maintaining the left extendable frame member **145** in a substantially parallel configuration with the right extendable frame member **141** (e.g., while maintaining a tight fit - e.g., a mating fit - between the left extendable frame member **145** and the upper portion **196** of the left frame member **114).**

### 3. Connecting member

In particular embodiments, the extendable frame assembly **140** comprises a connecting member that, in various embodiments, provides a rigid connection between the upper ends of the right and left extendable frame members **141, 145.** In the embodiment shown in FIG. 1, the secondary wheel assembly **150** serves this purpose. However, in other embodiments, another suitable structure may serve in this role.

### Secondary Wheel Assembly

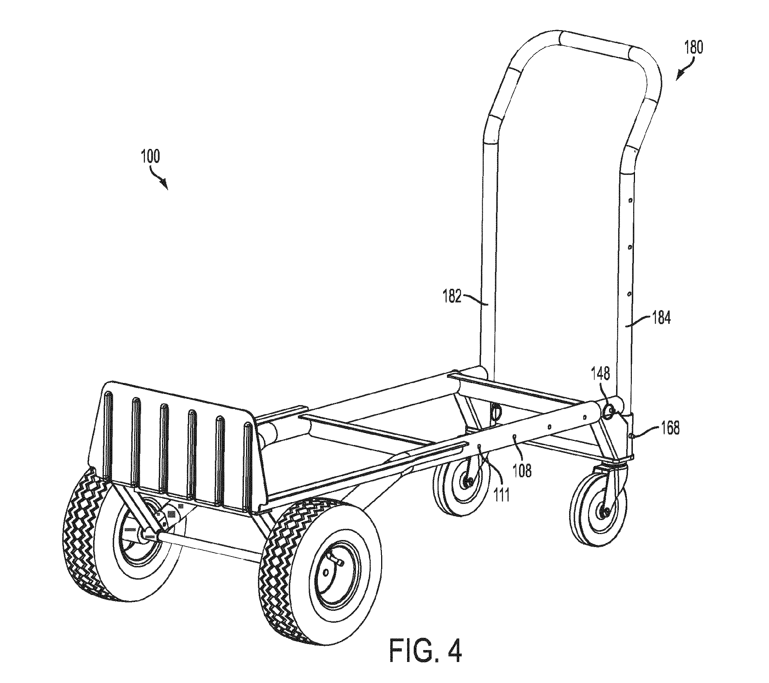

In particular embodiments, the expandable hand truck **100** may further comprise a secondary wheel assembly **150.** As may be understood from FIGS. 4-5, in various embodiments, the secondary wheel assembly **150** is adapted for facilitating the movement of the hand truck **100** relative to a support surface supporting the hand truck while the hand truck **100** is in a horizontal orientation (e.g., while the hand truck is in a platform cart orientation). The secondary wheel assembly **150** may be adapted for cooperating with the primary wheel assembly **130** to facilitate a rolling movement of the hand truck **100** over the support surface.

In various embodiments, the secondary wheel assembly **150** comprises at least one wheel that is rotatably attached adjacent the extendable frame assembly **140.** For example, in the embodiment shown in FIGS. 1-8, the secondary wheel assembly **150** comprises a pair of secondary wheels **158, 160** (in this case, a pair of caster wheels). As shown in FIG. 1, the secondary wheel assembly **150** may be attached, for example, adjacent the extendable frame assembly **140** (e.g., adjacent the right and left extendable frame members **141, 145).**

As may be understood from FIG. 1, in particular embodiments, the secondary wheel assembly **150** comprises a substantially planar central support **156** that is positioned behind an upper portion of the hand truck **100.** In particular embodiments, the central support **156** is substantially parallel to the hand truck's front face. In the embodiment shown in in FIG. 1, the lateral sides of the central support **156** generally align with respective lateral sides of the hand truck **100.**

In various embodiments, the secondary wheel assembly **150** further includes a substantially planar (e.g., rigid) right connector **152** that extends between the right extendable frame member **141** and the right lateral side of the central support **156.** Similarly, the secondary wheel assembly **150** also includes a substantially planar (e.g., rigid) left connector **154** that extends between the left extendable frame member **145** and the left lateral side of the central support **156.**

In particular embodiments, such as the embodiment of FIG. 1, the secondary wheel assembly **150** includes a left handle support **162** that extends outwardly from a front surface of the central support **156** adjacent the central support's left lateral side. The left handle support **162** defines an interior portion that is adapted for snuggly receiving a lower end of a left handle portion **184** of the hand truck's handle **180** (e.g., through an opening **164** in a distal end of the left handle support **162).** As shown in Figure 1, the left handle support may extend outwardly from the front surface of the central support **156** (e.g., at an angle of about 90 degrees from the front surface of the central support **156).**

In the embodiment of FIG. 1, the secondary wheel assembly **150** also includes a right handle support **172** that extends outwardly from a front surface of the central support **156** adjacent the central support's right lateral side. In particular embodiments, the right handle support **172** defines an interior portion that is adapted for snuggly receiving a lower end of a right handle portion **182** of the hand truck's handle **180** (e.g., through an opening **174** in a distal end of the right handle support **172).** The right handle support **172** may extend outwardly from the front surface of the central support **156** (e.g., at an angle of about 90 degrees from the front surface of the central support **156).** In various embodiments, such as the embodiment of FIG. 1, the right and left handle supports **172, 162** are adapted to cooperate to maintain the hand truck's handle **180** in an orientation that is substantially parallel to the hand truck's nose plate **120.**

As shown in FIG. 1, the right and left handle supports **172, 162** may include suitable locking mechanisms for maintaining the ends of the hand truck's handle **180** in a substantially fixed position relative to the hand truck's handle supports **172, 162.** One suitable locking mechanism may be, for example, a pin **168, 178** that extends through an opening **166, 176** in one of the hand truck's handle supports **172, 162** and then through a corresponding hole in a side portion of a respective end of the hand truck's handle **180.** Although the locking mechanism is shown as a pin arrangement in FIG. 1, any other suitable locking mechanism may be used for this purpose.

As shown in FIG. 1, in particular embodiments, the right and left handle supports **172, 162** are spaced apart from each other by a distance corresponding to the distance between the right and left handle portions **182, 184** of the upper cart handle **180.** The exact length of this spacing may vary, for example, from model to model.

### Upper Cart Handle

The hand truck **100** may include any suitable type of upper cart handle **180.** As shown in FIG. 1, the upper cart handle **180** may comprise a substantially U-shaped piece of metal tubing. In the embodiment shown in FIG. 1, the upper cart handle **180** comprises: (1) a right handle portion **182;** (2) a left handle portion **184;** and (3) a central handle portion **186.**

The right handle portion **182** may comprise a substantially straight, elongated tube having, for example, a substantially circular (e.g., circular) profile. In alternative embodiments, the right handle portion **182** may have any other suitable profile (e.g., a square, rectangular, or oval profile). As shown in FIG. 1, the right handle portion **182** may be adapted to fit and slide within the right extendable frame member **141.** In various embodiments, the right handle portion **182** has a cross sectional profile that at least generally corresponds to the cross sectional profile of the right extendable frame member **141.** The dimensions of the inner surface of the right extendable frame member **141** may substantially correspond to (e.g., correspond to) the dimensions of the outer surface of the right handle portion **182** such that the right handle portion **182** can nest within the right extendable frame member **141** with sufficient clearance to facilitate smooth sliding and sufficient snugness to provide rigidity of the hand truck **100** when the upper cart handle **180** is in an extended position.

In particular embodiments, the right extendable frame member **141** is adapted to fit and slide within the right frame member **112.** As may be understood from FIG. 1, when the right handle portion **182** is nested within the right extendable frame member **141** and the right extendable frame member **141** is nested within the right frame member **112,** the right handle portion **182,** the right extendable frame member **141,** and the right frame member **112** are maintained in a triple nested relationship with one another.

In various embodiments, the left handle portion **184** may comprise a substantially straight, elongated tube having, for example, a substantially circular (e.g., circular) profile. In alternative embodiments, the left handle portion **184** may have any other suitable profile (e.g., a square, rectangular, or oval profile). As shown in FIG. 1, the left handle portion **184** may be adapted to fit and slide within the left extendable frame member **145.** In various embodiments, the left handle portion **184** has a cross sectional profile that corresponds to the cross sectional profile of the left extendable frame member **145.** The dimensions of the inner surface of the left extendable frame member **145** may substantially correspond to (e.g., correspond to) the dimensions of the outer surface of the left handle portion **184** such that the left handle portion **184** can nest within the left extendable frame member **145** with sufficient clearance to facilitate smooth sliding and sufficient snugness to provide rigidity of the hand truck **100** when the upper cart handle **180** is in an extended position.

In particular embodiments, the left extendable frame member **145** is adapted to fit and slide within the left frame member **114.** As may be understood from FIG. 1, when the left handle portion **184** is nested within the left extendable frame member **145** and the left extendable frame member **145** is nested within the left frame member **114,** the left handle portion **184,** the left extendable frame member **145,** and the left frame member **114** are maintained in a triple nested relationship with one another.

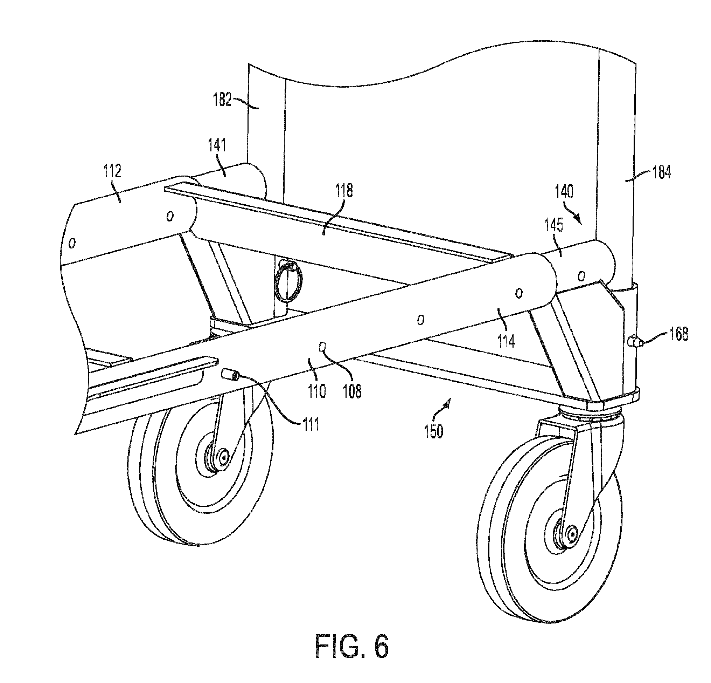

As shown in FIGS. 6-8, one or more spring-loaded buttons **111** may be used to selectively lock the hand truck's frame members in place at different positions relative to the hand truck's frame **110.** Each spring loaded button **111** may include a spring that is adapted for biasing the button **111** away from the spring and through one or more holes **108** in the frame **110.** In alternative embodiments, any other suitable locking mechanism may be used in place of the spring loaded buttons.

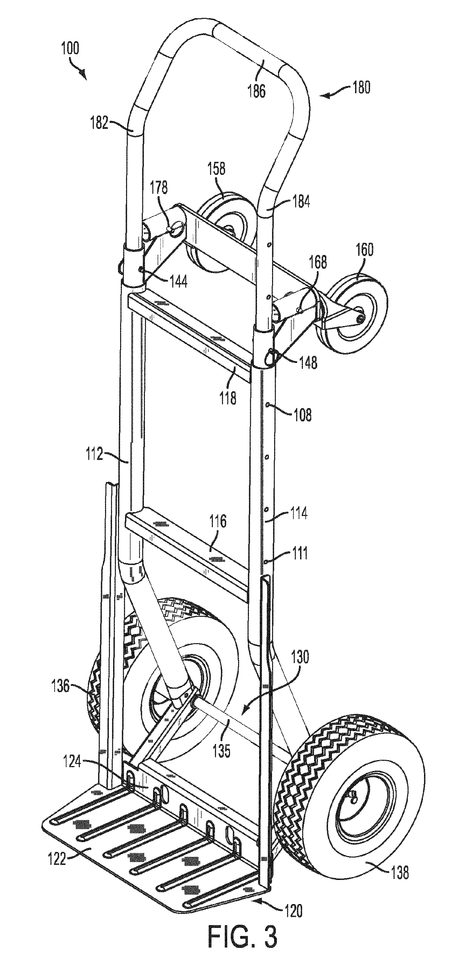

As shown in FIGS. 1-3, the upper cart handle **180** is adapted for selective extension and retraction relative to the hand truck's base portion **101.** FIG. 1 shows a particular embodiment of a hand truck **100** with the upper cart handle **180** in a retracted position. FIG. 3 shows a particular embodiment of a hand truck **100** with the upper cart handle **180** in an extended position. In various embodiments, the upper cart handle **180** further comprises a locking mechanism for locking the upper cart handle **180** at various lengths of extension. In the embodiment shown in FIGS. 1-3, the locking mechanism includes pins **144, 148** that lock the upper cart handle **180** in place. Other embodiments may include any other suitable locking mechanism.

### Alternative Embodiments

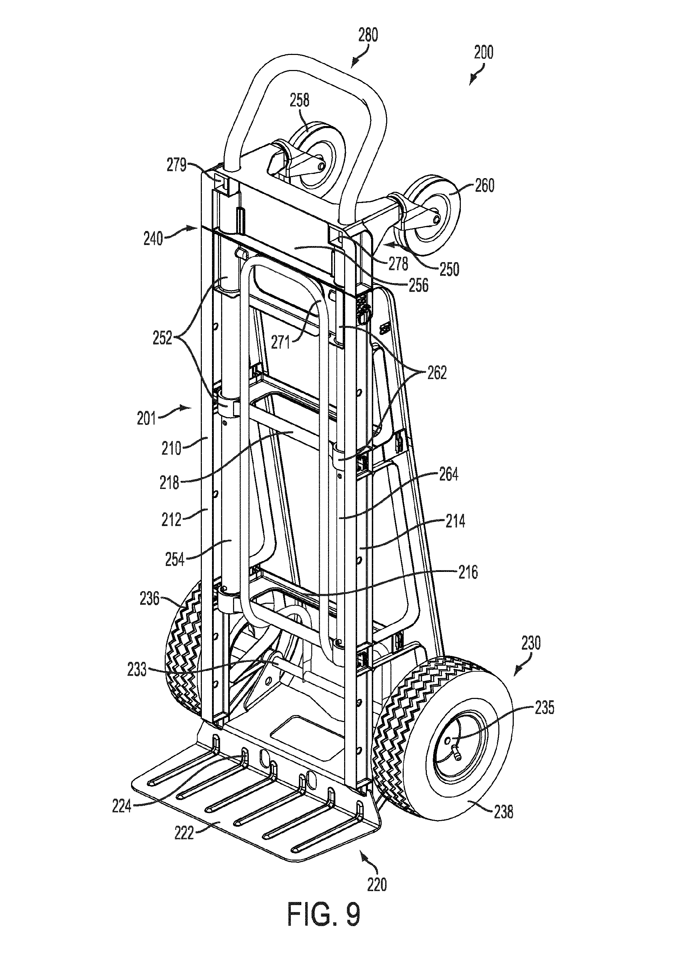

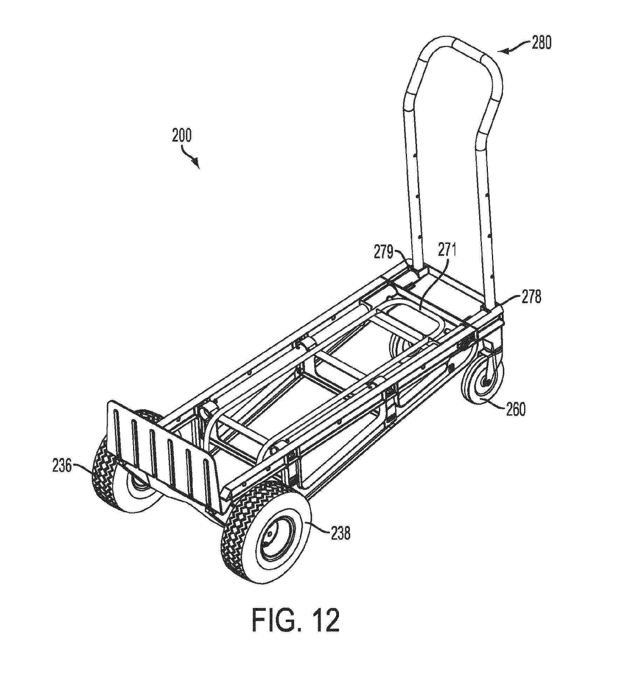

An alternative embodiment of the hand truck is shown in FIGS. 9-15. In this embodiment, much of the hand truck **200** may, for example, be made of a composite material (e.g., plastic). However the basic structure and functionality of the hand truck **200** is similar to that of the hand truck **100** shown in FIGS. 1-8. For example, the embodiment of the hand truck **200** shown in FIGS. 9-15 includes: (1) a hand truck base portion **201;** (2) an extendable frame assembly **240;** (3) a secondary wheel assembly **250;** (4) an upper cart handle **280;** and (5) a lower cart handle **271.** These various components are discussed in greater detail below.

### Hand Truck Base Portion

In particular embodiments, the hand truck base portion **201** may comprise: (1) a frame **210;** (2) a nose plate **220;** and (3) a primary wheel assembly **230.** These various components are discussed in greater detail below.

### 1. Frame

The hand truck base portion **201** may include any suitable type of frame. In the embodiment shown in FIG. 9, this frame **210** includes: (1) a right frame member **212** (which, in this embodiment, is in the form of a substantially planar, substantially triangular truss, which is adapted to stand in a substantially vertical orientation when the hand truck base portion **201** is in an upright orientation); (2) a left frame member **214,** which, in this embodiment, is also a substantially planar, substantially triangular truss, which is adapted to stand in a substantially vertical orientation when the hand truck base portion **201** is in an upright orientation); and (3) a plurality of crossbars **216, 218** that extend between, and physically connect, the right and left frame members **212, 214.**

The various components of the frame **210** may be made of any suitable (preferably sturdy) material (e.g., a suitable metal such as steel or aluminum, or plastic). In various embodiments, these components are secured together using any suitable fastening technique to provide a rigid frame for the hand truck.

### 2. Nose Plate

The hand truck base portion **201** may include any suitable type of nose plate **220.** As shown in FIG. 6, this nose plate **220** may include: (1) a substantially planar support plate **222;** and (2) a substantially planar face plate **224** that extends upwardly adjacent a rear edge of the support plate **222.** The nose plate **220** is adapted to support a load and may be attached adjacent (e.g., to) a lower end of the hand truck base portion's frame **210** in any suitable manner (e.g., using suitable fasteners or welding techniques).

### 3. Primary Wheel Assembly

In particular embodiments, the hand truck's primary wheel assembly **230** is adapted for facilitating the movement of the hand truck **200** relative to a support surface that is supporting the hand truck **200.** In the embodiment shown in FIG. 9, the primary wheel assembly **230** includes an axle support that includes one or more bearings that may be, for example, attached adjacent, or integrated into, the structure of the right and left frame members **212, 214.** In the embodiment shown in FIG. 9, the right and left frame members **212, 214** each include a bearing **233** that defines an opening that is dimensioned for receiving an axle **235** that extends through the opening.

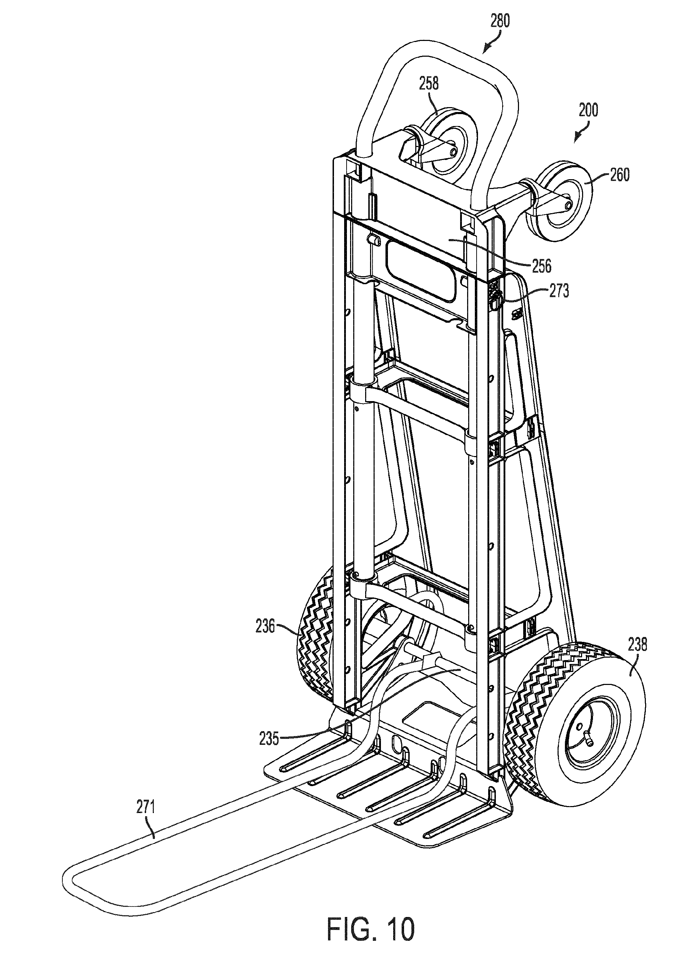

The primary wheel assembly **230** may further include an elongated hand truck axle **235** (See FIG. 9 and 10) that extends through the openings in the right and left bearings **233** so that the axle **235** is substantially parallel to a support surface that supports the hand truck **200** when the hand truck base portion **201** is in an upright orientation. The primary wheel assembly **230** further includes a pair of wheels **236, 238** that are rotatably mounted, respectively, adjacent (e.g., to) opposite ends of the hand truck's axle **235.**

### Extendable Frame Assembly

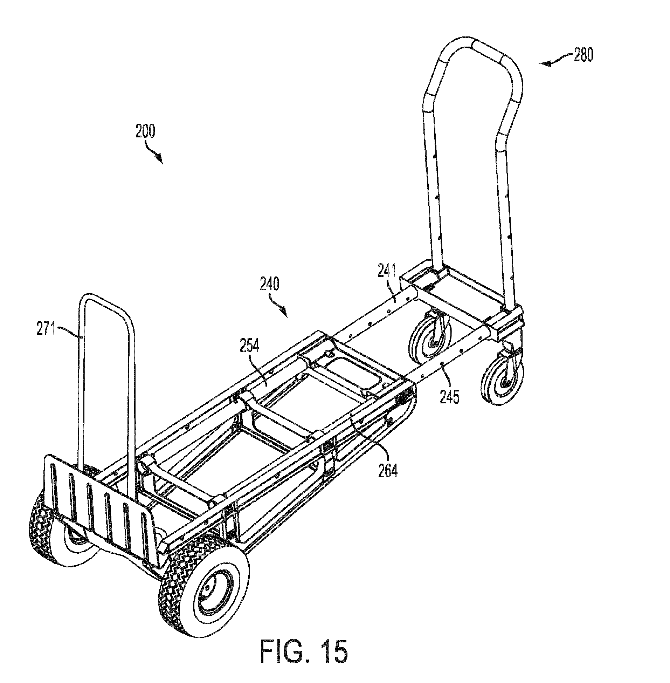

In particular embodiments, the extendable frame assembly **240** is adapted for facilitating the selective conversion of the hand truck **200** between: (1) an unextended configuration and (2) an extended configuration. In the embodiment of FIGS. 9-15, this extendable frame assembly **240** includes: (1) a right extendable frame member **241** (see FIG. 15); (2) a left extendable frame member **245;** and (3) a connecting member that connects the right and left extendable frame members **241, 245** together. These various components are discussed in greater detail below.

### 1. Right Extendable Frame Member

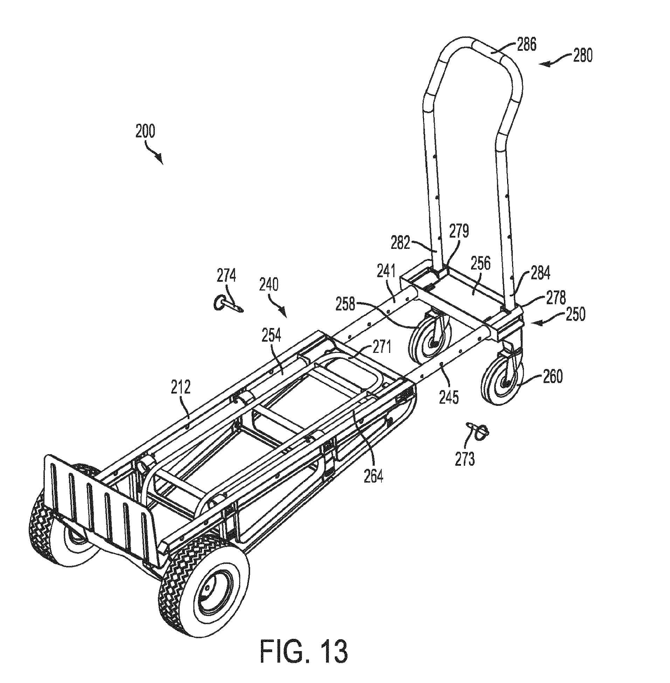

As shown in FIG. 13, the right extendable frame member **241** may comprise an elongated tube (e.g., a tube having a cross-section that, for example, may be substantially in the shape of a square, circle, oval, or any other suitable shape). The right extendable frame member **241** may be made of any suitable (preferably sturdy) material (e.g., a suitable metal such as steel or aluminum, or plastic).

As shown in FIG. 13, the right extendable frame member **241** may be adapted to fit within a first hollow tube **254** (or other suitable structure) that is attached adjacent an interior portion of the frame's right frame member **212** (e.g., via one or more suitable O or C shaped supports **252).** As shown in FIG. 13, the inner cross-sectional profile of the first hollow tube **254** may at least substantially correspond to an outer cross-sectional profile of the right extendable frame member **241.** In particular embodiments, the right extendable frame member **241** has an outer diameter that is substantially equal to an inner diameter of the first hollow tube **254.** The respective diameters of the right extendable frame member **241** and first hollow tube **254** may be chosen to allow the right extendable frame member **241** to translate within the first hollow tube **254** while maintaining the right extendable frame member **241** in a substantially parallel configuration with the first hollow tube **254** (e.g., while maintaining a tight fit — e.g., a mating fit - between the right extendable frame member **241** and the first hollow tube **254).**

### 2. Left Extendable Frame Member

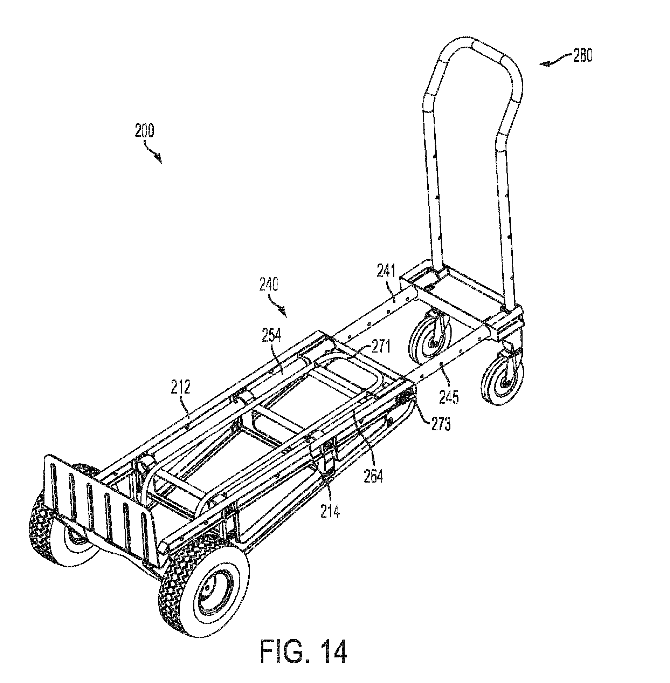

As shown in FIG. 14, the left extendable frame member **245** may comprise an elongated tube (e.g., a tube having a cross-section that, for example, may be substantially in the shape of a square, circle, oval, or any other suitable shape). The left extendable frame member **245** may be made of any suitable (preferably sturdy) material (e.g., a suitable metal such as steel or aluminum, or plastic).

As shown in FIG. 14, the left extendable frame member **245** may be adapted to fit within a second hollow tube **264** (or other suitable structure) that is attached adjacent an interior portion of the frame's left frame member **214** (e.g., via one or more suitable O or C shaped supports **262).** As shown in FIG. 14, the inner cross-sectional profile of the second hollow tube **264** may at least substantially correspond to an outer cross-sectional profile of the left extendable frame member **245.** In particular embodiments, the left extendable frame member **245** has an outer diameter that is substantially equal to an inner diameter of the second hollow tube **264** of the left frame member **214.** The respective diameters of the left extendable frame member **245** and second hollow tube **264** may be chosen to allow the left extendable frame member **245** to translate within the second hollow tube **264** while maintaining the left extendable frame member **245** in a substantially parallel configuration with the second hollow tube **264** (e.g., while maintaining a tight fit — e.g., a mating fit - between the left extendable frame member **245** and the second hollow tube **264).**

### 3. Connecting Member

In particular embodiments, the extendable frame assembly **240** comprises a connecting member that, in various embodiments, provides a rigid connection between the upper ends of the right and left extendable frame members **241, 245.** In the embodiment shown in FIG. 13, the secondary wheel assembly **250** serves this purpose. However, in other embodiments, another suitable structure may serve in this role.

### Secondary Wheel Assembly

In particular embodiments, the expandable hand truck **200** comprises a secondary wheel assembly **250.** In the embodiment shown in FIG. 13, the secondary wheel assembly **250** is adapted for facilitating the movement of the hand truck **200** relative to a support surface supporting the hand truck **200** while the hand truck **200** is in a horizontal orientation (e.g., while the hand truck **200** is in a platform cart orientation, such as the orientation shown in FIG. 13). The secondary wheel assembly **250** may be adapted for cooperating with the primary wheel assembly **230** to facilitate a rolling movement of the hand truck **200** over the support surface.

In various embodiments, the secondary wheel assembly **250** comprises at least one wheel that is rotatably attached adjacent the extendable frame assembly **240.** In the embodiment shown in FIG. 13, the secondary wheel assembly **250** comprises a pair of secondary wheels **258, 260** (in this case, a pair of caster wheels). As shown in FIG. 13, the secondary wheel assembly **250** may be attached, for example, to at least substantially rigidly connect the right and left extendable frame members **241, 245).**

As may be understood from FIG. 13, in particular embodiments, the secondary wheel assembly **250** comprises a substantially planar central portion **256** that extends between the respective upper ends of the right and left extendable frame members **241, 245.** In particular embodiments, the central support portion **256** is substantially parallel to the hand truck's front face. In the embodiment shown in in FIG. 13, the lateral sides of the secondary wheel assembly **250** generally align with respective lateral sides of the hand truck.

In particular embodiments, such as the embodiments of FIGS. 9 and 13, the secondary wheel assembly **250** includes a right handle support **279** that includes a recess defined by the secondary wheel assembly's central support portion **256** adjacent the central support's right lateral side. In particular embodiments, the right handle support **279** is adapted for snuggly receiving a lower end of a right handle portion **282** of the hand truck's handle **280.**

In the embodiment of FIGS. 9 and 13, the secondary wheel assembly **250** also includes a left handle support **278** that includes a recess defined by the secondary wheel assembly's central support portion **256** adjacent the central support portion's left lateral side. In particular embodiments, the left handle support **278** is adapted for snuggly receiving a lower end of a left handle portion **284** of the hand truck's handle **280.** In various embodiments, such as the embodiment of FIGS. 9 and 13, the left and right handle supports **278, 279** are adapted to cooperate to maintain the hand truck's handle **280** in an orientation that is substantially parallel to the hand truck's nose plate **220.**

In various embodiments, the left and right handle supports **278, 279** may include suitable locking mechanisms for maintaining the ends of the hand truck's handle **280** in a substantially fixed position relative to the hand truck's handle supports **278, 279.** One suitable locking mechanism may be, for example, a pin that extends through an opening in one of the hand truck's handle supports and then through a corresponding hole in a side portion of a respective end of the hand truck's handle **280.** In other embodiments, the right and left handle supports **278, 279** and the hand truck's handle **280** may be dimensioned so that the frictional engagement between portions of the ends of the hand truck's handle **280** and the right and left handle supports **278, 279** is sufficient to maintain the handle **280** in the desired orientation.

As shown in FIG. 14, in particular embodiments, the left and right handle supports **278, 279** are spaced apart from each other by a distance corresponding to the distance between the right and left handle portions **282, 284** of the upper cart handle **280.** The exact length of this spacing may vary, for example, from model to model.

### Upper Cart Handle

The hand truck **200** may include any suitable type of upper cart handle **280.** As shown in FIGS. 9-15, the upper cart handle **280** may comprise a substantially U-shaped piece of metal tubing. In the embodiment shown in FIG. 13, the upper cart handle **280** comprises: (1) a right handle portion **282;** (2) a left handle portion **284;** and (3) a central handle portion **286.**

The right handle portion **282** may comprise a substantially straight, elongated tube having, for example, a substantially circular (e.g., circular) cross-sectional profile. In alternative embodiments, the right handle portion **282** may have any other suitable cross-sectional profile (e.g., a square, rectangular, or oval profile). As shown in FIG. 9-11, the right handle portion **282** may be adapted to fit and slide within the right extendable frame member **241.** In various embodiments, the right handle portion **282** has a cross sectional profile that at least generally corresponds to the cross sectional profile of the right extendable frame member **241.** The dimensions of the inner surface of the right extendable frame member **241** may substantially correspond to (e.g., correspond to) the dimensions of the outer surface of the right handle portion **282** such that the right handle portion **282** can nest within the right extendable frame member **241** with sufficient clearance to facilitate smooth sliding and sufficient snugness to provide rigidity of the hand truck **200** when the upper cart handle **280** is in an extended position.

In particular embodiments, the right extendable frame member **241** is adapted to fit and slide within the first tube **254.** In various embodiments, when the right handle portion **282** is nested within the right extendable frame member **241,** and the right extendable frame member **241** is nested within the first tube **254,** the right handle portion **282,** the right extendable frame member **241,** and the first tube **254** are maintained in a triple nested relationship with one another.

Similarly, the left handle portion **284** may comprise a substantially straight, elongated tube having, for example, a substantially circular (e.g., circular) profile. In alternative embodiments, the left handle portion **284** may have any other suitable profile (e.g., a square, rectangular, or oval profile). As shown in FIG. 13, the left handle portion **284** may be adapted to fit and slide within the left extendable frame member **245.** In various embodiments, the left handle portion **284** has a cross sectional profile that at least generally corresponds to the cross sectional profile of the left extendable frame member **245.** The dimensions of the inner surface of the left extendable frame member **245** may substantially correspond to (e.g., correspond to) the dimensions of the outer surface of the left handle portion **284** such that the left handle portion **284** can nest within the left extendable frame member **245** with sufficient clearance to facilitate smooth sliding and sufficient snugness to provide rigidity of the hand truck **200** when the upper cart handle **280** is in an extended position.

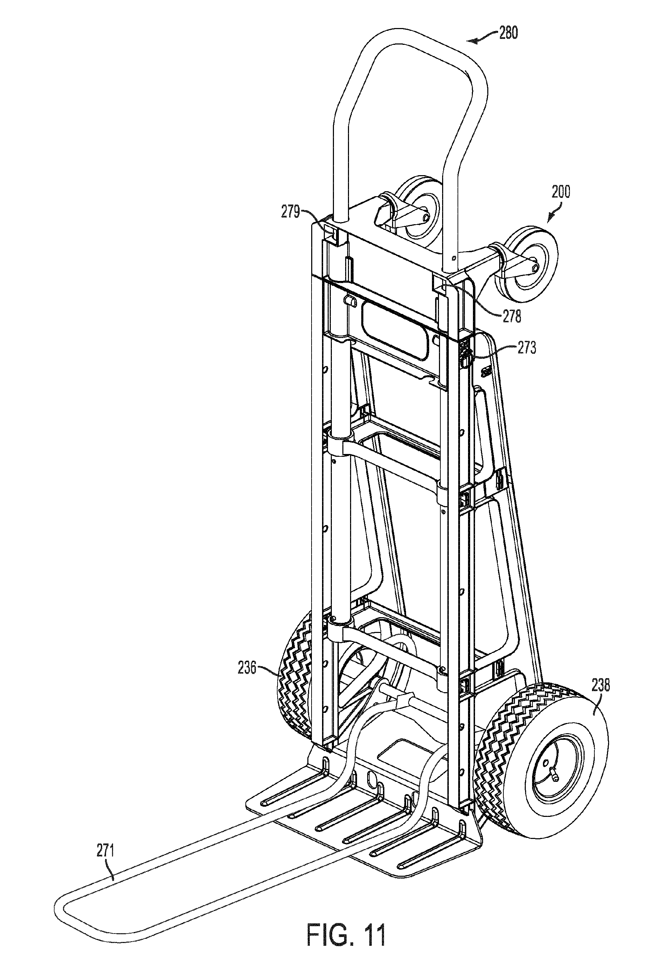

In particular embodiments, the left extendable frame member **245** is adapted to fit and slide within the second tube **264.** As may be understood from FIG. 11, when the left handle portion **284** is nested within the left extendable frame member **245** and the left extendable frame member **245** is nested within the second tube **264,** the left handle portion **284,** the left extendable frame member **245,** and the second tube **264** are maintained in a triple nested relationship with one another.

In various embodiments, the upper cart handle **280** is adapted for selective extension and retraction relative to the hand truck's base portion **201.** FIG. 9 shows a particular embodiment of a hand truck **200** with the upper cart handle **280** in a retracted position. FIG. 11 shows the hand truck **200** with the upper cart handle **280** in an extended position. In various embodiments, the upper cart handle **280** further comprises a locking mechanism for locking the upper cart handle **280** at various lengths of extension. In the embodiment shown in FIGS. 9-11, the locking mechanism may include pins **279, 273** that lock the upper cart handle **280** in place by passing through openings in the sidewall of the right and left handle portions **282, 284** and the right and left extendable frame members **241, 245.** Other embodiments may include any other suitable locking mechanism.

### Lower Cart Handle

As shown in FIGS. 9-15, the hand truck **200** may further include a lower cart handle **271** that may, for example, be useful in restricting the movement of larger loads that are supported by the hand truck **200.** In particular embodiments, the lower cart handle **271** is substantially U-shaped and is rotatably mounted adjacent (e.g., to) the hand truck **200** to rotate from a retracted position shown in FIG. 14 (in which the lower cart handle **271** is substantially parallel to the hand truck's front face) to an extended position shown in FIG. 15 in which the lower cart handle **271** is substantially parallel to the hand truck's nose plate **220.**

### Conversion and Extension of Hand Truck

As may be understood from FIGS. 1-4, to convert the hand truck **100** from a vertical operating arrangement (see FIG. 3) to the horizontal operating arrangement (see FIG. 4), a user may position the hand truck **100** adjacent a support surface so that the hand truck's primary wheels **136, 138** and secondary wheels **158, 160** are all in contact with the support surface. Once the hand truck **100** is in this horizontal operating arrangement, the user may: (1) remove the upper handle assembly **180** from the extendable frame assembly **140;** (2) insert the handle assembly's right handle portion **182** into the right handle support **172;** and (3) insert the left handle portion **184** into the left handle support **162.**

The user may then selectively reposition the hand truck's extendable frame assembly **140** relative to its base portion **101** to adjust the length of the hand truck **100.** This may, for example, allow the user to selectively move the hand truck **100** between a first configuration and a second, extended configuration. As noted above, the extendable frame assembly **140** may be selectively locked in an extended or unextended configuration with any suitable locking mechanism (e.g., a pin).

In various embodiments, similar techniques may also be used to selectively move the hand truck **100** between unextended and extended configurations while the hand truck **100** is in the upright, vertical operating arrangement.

### Conclusion

Many modifications and other embodiments will come to mind to one skilled in the art to which this invention pertains having the benefit of the teachings presented in the foregoing descriptions and the associated drawings. For example, as will be understood by one skilled in the relevant field in light of this disclosure, the invention may take form in a variety of different mechanical and operational configurations. Therefore, it is to be understood that the invention is not to be limited to the specific embodiments disclosed and that modifications and other embodiments are intended to be included within the scope of the appended exemplary concepts. Although specific terms are employed herein, they are used in a generic and descriptive sense only and not for the purposes of limitation.

## Claims

1. A hand truck (100) comprising:
a hand truck frame (101);
a nose plate (120) disposed adjacent a lower end (193,197) of the hand truck frame;
a primary wheel assembly (130) comprising at least one primary wheel (136,138), the primary wheel assembly being disposed adjacent the nose plate;
a secondary wheel assembly (150) comprising at least one secondary wheel (160), the secondary wheel assembly being disposed adjacent an upper end (192,196) of the hand truck frame; and,
an extension mechanism (140) for allowing a user to selectively adjust a distance between the primary wheel assembly and the secondary wheel assembly.

2. The hand truck of Claim 1,wherein:
the hand truck is adapted to be selectively moved between:
(A) a hand truck orientation in which:
the at least one primary wheel (136,138) is positioned in contact with a horizontal support surface that is supporting the hand truck;
the secondary wheel assembly (150) is spaced apart from the support surface; and
the hand truck is orientated to use the primary wheel assembly, but not the secondary wheel assembly, to roll over the support surface; and
(B) a cart orientation in which:
the at least one primary wheel (136,138) is positioned in contact with a horizontal support surface that is supporting the hand truck;
the at least one secondary wheel (150) is positioned in contact with the support surface; and
the hand truck is orientated to use both the primary wheel assembly and the secondary wheel assembly to roll over the support surface; and

3. The hand truck of Claim 2, wherein the extension mechanism is adapted to allow a user to:
selectively adjust the distance between the primary wheel assembly and the secondary wheel assembly when the hand truck is in the hand truck orientation; and
selectively adjust the distance between the primary wheel assembly and the secondary wheel assembly when the hand truck is in the cart orientation.

4. The hand truck of Claim 1, 2 or 3, wherein the upper end (192,196) comprises an upper cart handle (180) having a grip portion (186).

5. The hand truck of Claim 4, wherein the upper cart handle (180) is mounted to slide between:
(A) a first position, in which the grip portion is spaced a first distance from the nose plate; and
(B) a second, extended position, in which the grip portion is spaced a second distance from the nose plate, the second distance being greater than the first distance.

6. The hand truck of Claim 5, wherein:
at least a particular portion (182,184) of the upper cart handle (180) is slideably mounted, in a nested relationship, with a particular portion (141,145) of the extension mechanism (140).

7. The hand truck of Claim 6, wherein:
the particular portion (141,145) of the extension mechanism is substantially tubular; and preferably wherein the portion (182,184) of the upper cart handle and the particular portion (141,145) of the extension mechanism are connected in a telescoping relationship: and/or
the particular portion (141,145) of the extension mechanism is slideably mounted, in a nested relationship, with at least a portion (192,196) of the hand truck frame (101); and preferably wherein the particular portion (141,145) of the extension mechanism, and the portion (192,196) of the hand truck frame are connected in a telescoping relationship.

8. The hand truck of any preceding claim, wherein:
the extension mechanism (140) is adapted to slide between:
a first position in which the secondary wheel assembly (150) is spaced apart from the primary wheel assembly (130) by a first distance, and
a second, extended position in which the secondary wheel assembly is spaced apart from the primary wheel assembly by a second distance, the second distance being greater than the first distance;
the extension mechanism (140) comprises a first elongated extension member (141) and a second elongated extension member (145) that is spaced laterally apart from the first extension member; and
the hand truck comprises a connecting member (152,156,154) that connects a portion of the first extension member to a portion of the second extension member so that, as the extension mechanism slides from the first position into the second, extended position, the first and second extension members slide in tandem relative to the hand truck frame.

9. The hand truck of Claim 8, wherein the connecting member (152,156,154) comprises the secondary wheel assembly (150).

10. The hand truck of Claims 2 and 4, or any of claims 5 to 8 when dependent on claims 2 and 4, wherein the upper cart handle (180) is adapted to be selectively moved between:
a first position in which the handle is positioned to allow a user, who is standing in an upright position, to operate the hand truck when the hand truck is in the hand truck orientation; and
a second position in which the handle is positioned to allow a user, who is standing in an upright position, to operate the hand truck when the hand truck is in the cart orientation.

11. The hand truck of Claim 10, wherein when the handle (180) is in the first position, the handle is mounted to slide relative to the hand truck frame (101).

12. The hand truck of Claim 10 or 11, wherein, when the handle (180) is in the second position, the handle is attached to the secondary wheel assembly (150).

13. The hand truck of any preceding claim, further including:
a lower cart handle (271) disposed adjacent the lower end of the frame, the handle configured to rotate between:
a first position in which the lower cart handle is substantially parallel to the frame; and
a second position in which the lower cart handle is substantially parallel to the nose plate (220).

14. The hand truck of any preceding claim, wherein the secondary wheel assembly comprises a plurality of secondary wheels.
